# EUROPÄISCHE PATENTANMELDUNG

(11) **EP 2 796 838 A1**
(43) Veröffentlichungstag der Anmeldung: **29.10.2014**
(21) Anmeldenummer: 13165011.1
(22) Anmeldetag: 23.04.2013
(51) Int. Cl.: G01F 15/18, G01F 23/16

(54) **Dichtabschnitt für eine Füllstandsmesseinheit zum Bestimmen des Füllstands in einem Behältnis**

(71) Anmelder: VEGA Grieshaber KG, 77709 Wolfach (DE)
(72) Erfinder: Kopp, Thomas, 77709 Wolfach (DE)
(74) Vertreter: Patentanwälte Westphal, Mussgnug & Partner

(57) **Zusammenfassung**

Die vorliegende Erfindung betrifft einen Dichtabschnitt für eine Füllstandsmesseinheit (10) zum Bestimmen des Füllstands in einem Behältnis, wobei die Füllstandsmesseinheit (10) einen Drucksensor (12) zum Bestimmen des Drucks im Behältnis, wobei der Drucksensor (12) eine druckempfindliche Keramikmembran (14) aufweist, und ein Anschlussstück (16) umfasst, mit dem die Füllstandsmesseinheit (10) am Behältnis anschließbar ist und das den Drucksensor (12) umschließt, wobei der Dichtabschnitt (24) ein Material umfasst, welches so gewählt ist, dass der Dichtabschnitt (24) auf die Keramikmembran (14) aufschrumpfbar ist.

## Beschreibung

Die vorliegende Erfindung betrifft einen Dichtabschnitt für eine Füllstandsmesseinheit zum Bestimmen des Füllstands in einem Behältnis, wobei die Füllstandsmesseinheit einen Drucksensor zum Bestimmen des Drucks im Behältnis und ein Anschlussstück umfasst, mit dem die Füllstandsmesseinheit am Behältnis anschließbar ist und das den Drucksensor umschließt, wobei der Drucksensor eine druckempfindliche Keramikmembran aufweist. Ferner betrifft die Erfindung das Anschlussstück und die Füllstandsmesseinheit selbst sowie ein Verfahren zum spaltfreien Verbinden eines Dichtabschnitts mit einer druckempfindlichen Keramikmembran eines Drucksensors und einem Anschlussstück einer Füllstandsmesseinheit zum Bestimmen des Füllstands in einem Behältnis.

Füllstandsmesseinheiten werden in ganz unterschiedlichen Bereichen der Technik eingesetzt. In der Verfahrenstechnik wird unter einem Fed-Batch eine Betriebsweise eines Reaktors verstanden, bei der eine bestimmte Substanz einem im Innenraum des Reaktors befindlichen Reaktionsgemisch zugegeben wird. Dabei ist es üblich, das Reaktionsgemisch zu rühren. Um eine ausreichende Durchmischung gewährleisten zu können, darf das Volumen im Reaktor ein bestimmtes Maß nicht überschreiten. Insbesondere soll verhindert werden, dass das Reaktionsgemisch mit der oberen Wandung des Reaktors in Berührung kommt. Folglich ist es wichtig, immer eine aktuelle Information über den momentanen Füllstand zu bekommen, so dass die Zugabe der Substanz rechtzeitig unterbrochen werden kann.

Es gibt aber auch Anwendungen, in denen ein gewisser Füllstand nicht unterschritten werden soll, beispielsweise in Futtersilos, wo das Unterschreiten eines Füllstands ein Hinweis darauf ist, dass der Futtervorrat demnächst verbraucht ist und das Futtersilo wieder aufgefüllt werden sollte.

Füllstandsmesseinheiten ermöglichen die automatische Kontrolle der Füllstände und sind daher integraler Bestandteil von Prozesssteuerungssystemen. Die Füllstandsmesseinheiten können an den jeweiligen Aggregatszustand der Substanz, deren Füllstand bestimmt werden soll, angepasst werden, so dass der Füllstand von festen, flüssigen oder gasförmigen Substanzen bestimmbar ist. Die Füllstandsmesseinheiten umfassen Anschlussstücke, mit denen sie in Öffnungen der jeweiligen Behältnisse, in denen sich die Substanz, deren Füllstand bestimmt werden soll, befindet, eingesetzt und an den Wandungen der Behältnisse befestigt werden.

Eine bekannte Möglichkeit, den Füllstand eines Füllguts in einem Behältnis zu bestimmen, ist die Bestimmung des vom Füllgut erzeugten hydrostatischen Drucks. Hierzu sind Füllstandsmesseinheiten bekannt, die einen Drucksensor mit einer Membran aus Edelstahl aufweisen. Die Membran bei derartigen Drucksensoren besteht üblicherweise aus gewelltem Edelstahl, die auf Unterschiede im hydrostatischen infolge des sich ändernden Füllstands reagiert. Der Drucksensor und die Membran sind dabei so eingerichtet, dass der sich ändernde hydrostatische Druck eine Änderung im elektrischen Widerstand eines durch die Edelstahlmembran fließenden Stroms bewirkt, aus der auf den Füllstand geschlossen werden kann. Die Membran aus Edelstahl kann dabei spaltfrei mit der Wandung des Drucksensors verschweißt werden. Eine spaltfreie Abdichtung ist insofern von besonderer Wichtigkeit, als dass die Substanz, deren Füllstand ermittelt werden soll, nicht unkontrolliert aus dem Behältnis austreten und in den Drucksensor eindringen darf.

Die gewellte Membran weist eine sehr geringe Dicke von ca. 50 µm auf, die somit sehr empfindlich gegenüber Verschleiß ist. Darüber hinaus wird bei derartigen Drucksensoren häufig eine Druckmittler-Flüssigkeit eingesetzt, die aber bei bestimmten Anwendungen nicht immer zugelassen ist, beispielsweise im Lebensmittel- und Pharmabereich. Zudem umfassen die Druckmittler-Flüssigkeiten häufig sogenannte Lack-benetzungsstörende Substanzen (LABS) wie Silikon, die in Lackieranlagen nicht eingesetzt werden dürfen.

Eine weitere Ausführungsform der bekannten Füllstandsmesseinheiten weist Drucksensoren mit einer Membran aus Keramik auf. Hierbei bewirkt der hydrostatische Druck des Füllgutes oder der Prozessdruck im Behältnis eine Auslenkung der Keramikmembran. Bei sich ändernden hydrostatischen Drücken stellt sich eine Kapazitätsänderung ein, aus der auf den Füllstand geschlossen werden kann. Drucksensoren mit einer Keramikmembran werden immer dann eingesetzt, wenn die Härte und Robustheit der Keramikmembran einen entscheidenden Vorteil bringt, insbesondere bei einem sehr korrosiven und abrasivem Füllgut. Zudem können die Keramikmembranen sehr flach ausgeführt sein, so dass sie frontbündig am Drucksensor angeordnet werden können und sich leicht reinigen lassen.

Nachteilig bei Drucksensoren mit Keramikmembranen ist jedoch, dass sie sich nicht wie die Drucksensoren aus Edelstahl mit der Wandung des Drucksensors verschweißen lassen. Folglich muss die Abdichtung unter Verwendung von Elastomeren erfolgen, was aber einige Nachteile mit sich bringt. Sinkt die Temperatur im Behältnis oder in der Umgebung des Behältnisses unter einen bestimmten Wert, so verringert sich die Elastizität der Elastomere so weit, dass keine spaltfreie Abdichtung mehr möglich ist, was insbesondere dann ein Problem darstellt, wenn Schwingungen im Behältnis auftreten. Ferner ist der Einsatz von Elastomeren in der Pharma- und Lebensmittelindustrie nur bedingt möglich, da es nicht ausgeschlossen werden kann, dass Teile der Elastomere in das jeweilige im Behältnis befindliche Produkt migrieren. Darüber hinaus müssen die Elastomere regelmäßig ausgetauscht werden, so dass sich der Betrieb der betreffenden Füllstandsmesseinheit verteuert.

Es ist bekannt, die Keramikmembranen mit Metallen zu verlöten, die einen ähnlichen Temperaturausdehnungskoeffizienten wie die für die Membran verwendete Keramik aufweisen. Allerdings haben diese Metalle den Nachteil, dass sie nur eine begrenzte Korrosionsbeständigkeit aufweisen und daher nur für bestimmte Anwendungen geeignet sind.

Aufgabe der vorliegenden Erfindung ist es daher, einen Dichtabschnitt anzugeben, mit dem Drucksensoren mit Keramikmembranen spaltfrei gegenüber den Anschlussstücken spaltfrei ohne die oben genannten Nachteile abgedichtet insbesondere ohne den Einsatz von Elastomeren werden können.

Gelöst wird die Aufgabe dadurch, dass der Dichtabschnitt ein Material umfasst, welches so gewählt ist, dass der Dichtabschnitt auf die Keramikmembran aufschrumpfbar ist. Durch das Aufschrumpfen des Dichtabschnitts lässt sich auf eine relativ einfache Weise eine zuverlässige spaltfreie Verbindung zwischen der Keramikmembran und dem Dichtabschnitt bereitstellen. Dabei wird das Material des Dichtabschnitts so gewählt, dass es sich bei Erwärmung ausdehnt und bei Abkühlung auf die üblicherweise im Behältnis oder in der Umgebung des Behältnisses herrschenden Bedingungen zusammenzieht. Es ist folglich nicht notwendig, einen Stoffschluss mit der Keramikmembran herzustellen, so dass man bei der Materialwahl deutlich freier ist als es bei den im Stand der Technik bekannten Lötverbindungen zwischen Keramikmembran und Dichtabschnitt der Fall ist. Insbesondere kann der Dichtabschnitt aus einem Material gefertigt werden, welches korrosionsbeständig ist. Auch ist es auf diese Weise möglich, auf die Verwendung von Elastomeren zu verzichten und ein Material auszuwählen, welches nicht in die Substanzen migriert, die sich im Behältnis befinden. Es wird eine spaltfreie und diffusionsdichte Verbindung zwischen dem Dichtabschnitt und der Keramikmembran des Drucksensors geschaffen, ohne dass Dichtungen kontrolliert und gegebenenfalls ausgetauscht werden müssten. Darüber hinaus kann auf eine Druckmittler-Flüssigkeit verzichtet werden, was insofern besonders vorteilhaft ist, als dass ein "trockener" Drucksensor bereitgestellt wird, so dass die Lage des Drucksensors keinen oder nahezu keinen Einfluss auf die Messergebnisse hat, was bei Drucksensoren mit Druckmittler-Flüssigkeit nicht der Fall ist. Weiterhin ist es ausgeschlossen, dass die Druckmittler-Flüssigkeit in Kontakt mit der im Behältnis befindlichen Substanz kommen kann, so dass der erfindungsgemäße Drucksensor auch in Anwendungen eingesetzt werden kann, die LABSfrei sein müssen, beispielsweise im Pharma- und Lebensmittelbereich sowie in Lackieranlagen. Zudem sind Keramikmembranen deutlich robuster als Edelstahlmembranen, abrasionsfest und lassen sich frontbündig im Drucksensor anordnen sowie flach und eben ausführen, so dass sie sich insbesondere im Vergleich zu einer gewellten Edelstahlmembran leichter reinigen lassen.

Vorzugsweise wird das Material des Dichtabschnitts so gewählt, dass es mit dem Anschlussstück mittels eines Stoffschlusses verbindbar ist. Mit einem Stoffschluss wird eine unlösbare Verbindung geschaffen, die in hohem Maße spaltfrei und damit diffusionsdicht ist. Dabei wird der Stoffschluss vorzugsweise mittels eines Schmelzverfahrens und insbesondere mittels eines Schweißverfahrens bereitgestellt. Diese Verfahren lassen sich heutzutage gut automatisieren und stellen sicher, dass eine robuste, spaltfreie und diffusionsdichte Verbindung zwischen dem Dichtabschnitt und dem Anschlussstück geschaffen wird. Zudem lässt sich eine große Anzahl von Materialien mittels eines Schmelzverfahrens zum Bereitstellen eines Stoffschlusses bearbeiten, so dass hierdurch die Auswahl der geeigneten Materialien unwesentlich eingeschränkt wird.

In einer vorteilhaften Ausgestaltung des erfindungsgemäßen Dichtabschnitts weist das Material einen Wärmeausdehnungskoeffizienten auf, welcher im Wesentlichen gleich dem der Keramikmembran ist. Hierdurch wird sichergestellt, dass über einen sehr großen Temperaturbereich keine Thermospannungen auftreten, die zu einer Spaltbildung zwischen dem Dichtabschnitt und dem Drucksensor führen und somit die Abdichtung gefährden könnten. So eignet sich diese Ausgestaltung insbesondere für Anwendungen, bei denen große Temperaturschwankungen auftreten. Der Fachmann weiß, welche Abweichungen in den Werten der Wärmeausdehnungskoeffizienten der für den Dichtabschnitt und die Keramikmembran verwendeten Materialien für welchen Temperaturbereich akzeptiert werden können.

Vorzugsweise ist das Material Titan. Titan weist einen Wärmeausdehnungskoeffizient auf, der denjenigen von üblicherweise verwendeten Materialien für die Keramikmembran wie Aluminiumoxid (Al₂O₃) sehr ähnlich ist. Zudem lässt sich Titan unter einer Schutzgasatmosphäre gut schweißen und ist temperatur- und korrosionsbeständig.

In einer besonders bevorzugten Ausgestaltung weist der Dichtabschnitt eine Beschichtung aus einem duktilen Material auf. Beispielsweise können als duktiles Material Parylene verwendet werden. Parylene sind hydrophobe, chemisch resistente Kunststoffe mit guter Barrierenwirkung gegenüber anorganischen und organischen Medien, starken Säuren, Laugen, Gasen und Wasserdampf. Zudem sind sie biostabil und biokompatibel. Wird der Dichtabschnitt auf die Wandung des Drucksensors aufgeschrumpft, können sich infolge von Fertigungsungenauigkeiten im Verlauf der sich kontaktierenden Flächen Spannungserhöhungen oder Spalte ausbilden. Die Beschichtung aus einem duktilen Material gleicht die Fertigungsungenauigkeiten aus und verhindert somit die Ausbildung von Spannungserhöhungen in der Wandung des Drucksensors oder im Dichtabschnitt. Infolge davon wird die Gefahr einer Rissbildung oder Deformation verringert. Zudem füllt das duktile Material eventuell entstehende Spalte aus, so dass die Dichtigkeit erhöht wird. Insofern wirkt die Beschichtung aus dem duktilen Material wie eine Dichtschicht.

Vorzugsweise ist der Dichtabschnitt ringförmig ausgestaltet. Dabei umschließt der Dichtabschnitt den Drucksensor, der vorzugsweise eine zylindrische Form hat. Hierdurch wird das Aufschrumpfen erleichtert, da der Dichtabschnitt bezüglich der gemeinsamen Achse nicht in einem gewissen Winkel auf den Drucksensor aufgeschrumpft werden muss. Aufgrund der rotationssymmetrischen Form lassen sich sowohl die Wandung des Drucksensors als auch der Dichtabschnitt einfach und kostengünstig herstellen.

Ein weiterer Aspekt der Erfindung betrifft ein Anschlussstück zum Anschließen einer Füllstandsmesseinheit an einem Behältnis, wobei die Füllstandsmesseinheit einen Drucksensor zum Bestimmen des Drucks im Behältnis, und einen Dichtabschnitt zum Abdichten der Füllstandsmesseinheit umfasst, wobei das Anschlussstück mittels eines Stoffschlusses mit dem Dichtabschnitt verbindbar ist und der Drucksensor eine druckempfindliche Keramikmembran aufweist. Mit einem Stoffschluss lässt sich eine spaltfreie, diffusionsdichte und dauerfeste Verbindung zwischen dem Dichtabschnitt und dem Anschlussstück bereitstellen, die in hohem Maße dicht ist.

Die Aufgabe wird ferner durch eine Füllstandsmesseinheit zum Bestimmen des Füllstands in einem Behältnis gelöst, wobei die Füllstandsmesseinheit einen Drucksensor zum Bestimmen des Drucks im Behältnis und ein Anschlussstück umfasst, mit dem die Füllstandsmesseinheit am Behältnis anschließbar ist und das den Drucksensor umschließt, wobei der Drucksensor eine druckempfindliche Keramikmembran und die Füllstandsmesseinheit ein Dichtabschnitt nach einem der vorherigen Ausführungsbeispiele aufweist. Die Vorteile und technischen Effekte, die mit der erfindungsgemäßen Füllstandsmesseinheit erzielt werden, entsprechen denjenigen, die für den erfindungsgemäßen Dichtabschnitt und für das erfindungsgemäße Anschlussstück beschrieben worden sind. Insbesondere kann der Dichtabschnitt auf die Keramikmembran aufgeschrumpft und mit dem Anschlussstück mittels eines Stoffschlusses verbunden werden, so dass der Drucksensor spaltfrei und ohne Verwendung von Elastomeren gegenüber dem Anschlussstück auf einfache und kostengünstige Weise diffusionsdicht abgedichtet werden kann.

Vorzugsweise weist die Keramikmembran eine Beschichtung aus einem duktilen Material auf. Wird der Dichtabschnitt auf die Keramikmembran des Drucksensors aufgeschrumpft, können sich infolge von Fertigungsungenauigkeiten im Verlauf der sich kontaktierenden Flächen Spannungserhöhungen oder Spalte ausbilden. Die Beschichtung aus einem duktilen Material gleicht die Fertigungsungenauigkeiten aus und verhindert somit die Ausbildung von Spannungserhöhungen in der Keramikmembran oder im Dichtabschnitt. Infolge davon wird die Gefahr einer ungewollten Deformation oder gar Zerstörung der Keramikmembran verringert. Zudem gleicht das duktile Material eventuell entstehende Spalte aus, so dass die Dichtigkeit erhöht wird. Weiterhin kann die Beschichtung die Übertragung von Schwingungen vom Behältnis auf die Keramikmembran dämpfen, so dass der Einfluss der Schwingungen auf das Messergebnis verringert wird.

In einer bevorzugten Ausgestaltung ist das Anschlussstück der Füllstandsmesseinheit nach einem der diesbezüglich diskutierten Ausführungen ausgebildet. Die Vorteile und technischen Effekte, die mit dieser Ausgestaltung der erfindungsgemäßen Füllstandsmesseinheit erzielt werden, entsprechen denjenigen, die für das erfindungsgemäße Anschlussstück beschrieben worden sind.

Vorzugsweise umfasst keramische Material Aluminiumoxid (Al₂O₃) oder besteht hieraus. Aluminiumoxid ist günstig in der Anschaffung und lässt sich auf einfache Weise zu einem keramischen Material weiterverarbeiten.

Ein weiterer Aspekt der Erfindung betrifft ein Verfahren zum spaltfreien Verbinden eines Dichtabschnitts mit einer druckempfindlichen Keramikmembran eines Drucksensors und einem Anschlussstück einer Füllstandsmesseinheit zum Bestimmen des Füllstands in einem Behältnis, umfassend folgende Schritte:
- Erwärmen des Dichtabschnitts auf eine vorgebbare Temperatur,
- Einbringen der Keramikmembran in den Dichtabschnitt und Aufschrumpfen des Dichtabschnitts auf die Wandung, und
- stoffschlüssiges Verbinden des Dichtabschnitts mit dem Anschlussstück.

Mit dem erfindungsgemäßen Verfahren kann auf einfache Weise eine zuverlässige Abdichtung des Dichtabschnitts gegenüber der Keramikmembran und gegenüber dem Anschlussstück bereitgestellt werden. Es kann auf die Verwendung von Elastomeren verzichtet werden, so dass eine spaltfreie und diffusionsdichte Verbindung über einen großen Temperaturbereich geschaffen werden kann, ohne dass die Gefahr besteht, dass Bestandteile in die Substanz, die sich im Behältnis befindet, migriert. Im Übrigen entsprechen die Vorteile und technischen Effekte des erfindungsgemäßen Verfahrens denjenigen, die für den erfindungsgemäßen Dichtabschnitt, das erfindungsgemäße Anschlussstück und die erfindungsgemäße Füllstandsmesseinheit erläutert worden sind.

Die Erfindung wird im Folgenden anhand eines bevorzugten Ausführungsbeispiels unter Bezugnahme auf die anhängende Zeichnung im Detail erläutert. Es zeigen
- Figur 1: eine Schnittzeichnung eines Ausführungsbeispiels der erfindungsgemäßen Füllstandsmesseinheit, und
- Figur 2: einen vergrößerten, nicht maßstäblichen Ausschnitt aus Figur 1 im Bereich des Kreises A, wobei nur die erfindungsrelevanten Teile berücksichtigt sind.

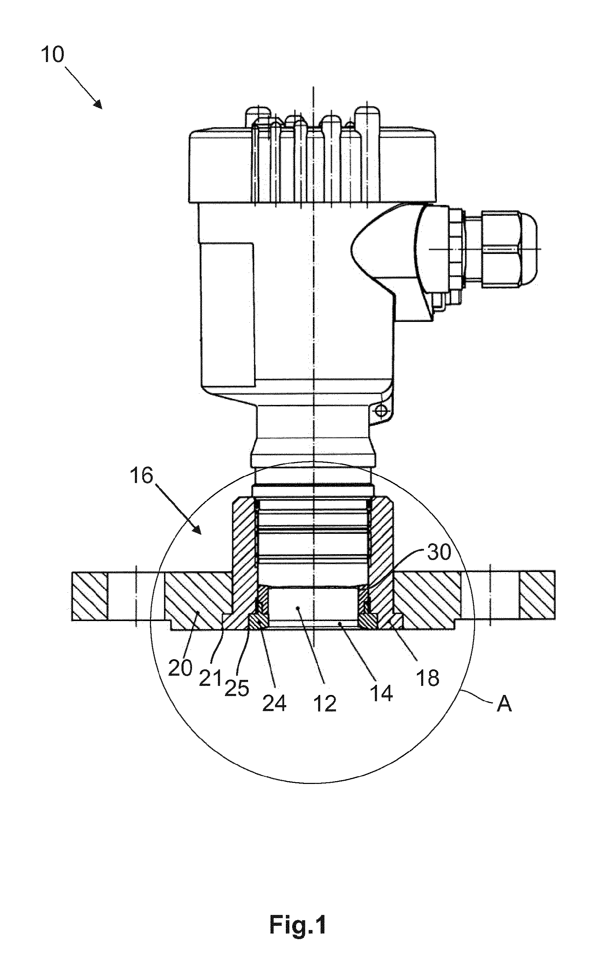

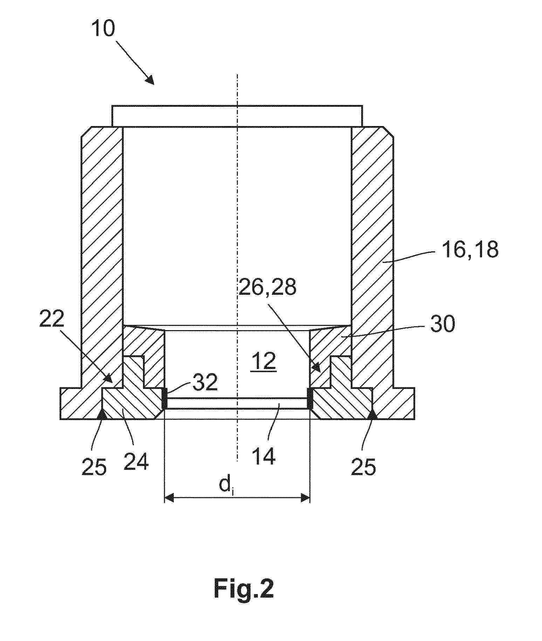

Die folgende Figurenbeschreibung bezieht sich sowohl auf Figur 1 als auch auf Figur 2.
Die Figuren 1 und 2 zeigen ein erfindungsgemäßes Ausführungsbeispiel einer druckbasierten Füllstandsmesseinheit 10, die einen Drucksensor 12 mit einer druckempfindlichen Keramikmembran 14 umfasst. Die Füllstandsmesseinheit 10 ist in ein Anschlussstück 16 eingesetzt, mit dem sie an ein nicht näher dargestelltes Behältnis angeschlossen werden kann. Im dargestellten Beispiel weist das Anschlussstück 16 einen Stutzen 18, in den die Füllstandsmesseinheit 10 eingesetzt werden kann, und einen Flansch 20 auf, mit dem die Füllstandsmesseinheit 10 mit dem Behältnis lösbar verbunden werden kann. Der Stutzen 18 des Anschlussstücks 16 ist im dargestellten Beispiel mit dem Flansch 20 verschweißt, so dass eine erste Schweißnaht 21vorhanden ist. Der Stutzen 18 kann aber auf jede andere geeignete Weise mit dem Flansch 20 verbunden sein.

Der Stutzen 18 weist eine Ausnehmung 22 auf (siehe Figur 2), in die ein Dichtabschnitt 24 einsetzbar ist. Der Dichtabschnitt 24 umfasst dabei ein Material, das so gewählt ist, dass der Dichtabschnitt 24 welches mit dem Stutzen 18 verschweißbar ist. Folglich ist eine zweite Schweißnaht 25 vorhanden. Auch der Dichtabschnitt 24 weist eine Ausnehmung 26 auf, in welche ein korrespondierender Vorsprung 28 eines Wandungsabschnitts 30 des Drucksensors 12 einbringbar ist. Der Dichtabschnitt 24 kann auf jede geeignete Weise mit dem Wandungsabschnitt 30 verbunden sein. Der Stutzen 18, der Dichtabschnitt 24 und der Wandungsabschnitt 30 des Drucksensors 12 sind jeweils ringförmig ausgebildet. Die Keramikmembran 14 ist beispielsweise aus Aluminiumoxid (Al₂O₃) gefertigt, während der Dichtabschnitt 24 aus Titan besteht. Beide Materialien weisen einen ähnlichen Wärmeausdehnungskoeffizienten auf, so dass sich Thermospannungen infolge von Temperaturschwankungen in engen Grenzen halten und hierdurch bedingte Beschädigungen weitgehend vermieden werden. Zudem werden temperaturbedingte Einflüsse auf das Messergebnis verringert.

Der Dichtabschnitt 24 ist auf die Keramikmembran 14 aufgeschrumpft. Hierzu wird der Dichtabschnitt 24 so weit erwärmt, so dass sich sein Innendurchmesser dᵢ so weit vergrößert, dass die Keramikmembran 14 in den Dichtabschnitt 24 einbringbar ist und der Dichtabschnitt 24 die Keramikmembran 14 umschließt. Die Temperatur, auf die der Dichtabschnitt 24 hierbei erwärmt werden muss, kann der Fachmann problemlos ermitteln. Anschließend wird der Dichtabschnitt 24 abgekühlt, so dass sich der Innendurchmesser dᵢ wieder auf das ursprüngliche Maß verringert, so dass eine spaltfreie Verbindung entsteht. Entweder der Dichtabschnitt 24 oder die Keramikmembran 14 oder beide weisen auf den beim Aufschrumpfen in Kontakt kommenden Flächen eine Beschichtung 32 aus einem duktilen Material, beispielsweise aus Parylene, auf. Beim Aufschrumpfen des Dichtabschnitts 24 auf die Keramikmembran 14 kann die Beschichtung 32 aus duktilem Material Unebenheiten oder andere Ungenauigkeiten der sich kontaktierenden Flächen ausgleichen, so dass die Beschichtung 32 als Ausgleichs- und Dichtschicht wirkt.

**Bezugszeichenliste**

| | |
|---|---|
| 10 | Füllstandsmesseinheit |
| 12 | Drucksensor |
| 14 | Keramikmembran |
| 16 | Anschlussstück |
| 18 | Stutzen |
| | |
| 20 | Flansch |
| 21 | erste Schweißnaht |
| 22 | Ausnehmung |
| 24 | Dichtabschnitt |
| 25 | zweite Schweißnaht |
| 26 | Ausnehmung |
| 28 | Vorsprung |
| | |
| 30 | Wandungsabschnitt |
| 32 | Beschichtung |
| | |
| A | Kreis |
| dᵢ | Innendurchmesser |

## Patentansprüche

1. Dichtabschnitt für eine Füllstandsmesseinheit (10) zum Bestimmen des Füllstands in einem Behältnis, wobei die Füllstandsmesseinheit (10) umfasst
- einen Drucksensor (12) zum Bestimmen des Drucks im Behältnis, wobei der Drucksensor (12) eine druckempfindliche Keramikmembran (14) aufweist, und
- ein Anschlussstück (16), mit dem die Füllstandsmesseinheit (10) am Behältnis anschließbar ist und das den Drucksensor (12) umschließt,
**dadurch gekennzeichnet, dass** der Dichtabschnitt (24) ein Material umfasst, welches so gewählt ist, dass der Dichtabschnitt (24) auf die Keramikmembran (14) aufschrumpfbar ist.

2. Dichtabschnitt nach Anspruch 1,
**dadurch gekennzeichnet, dass** das Material des Dichtabschnitts (24) mit dem Anschlussstück (16) mittels eines Stoffschlusses verbindbar ist.

3. Dichtabschnitt nach Anspruch 2,
**dadurch gekennzeichnet, dass** der Stoffschluss mittels eines Schmelzverfahrens und insbesondere mittels eines Schweißverfahrens bereitgestellt wird.

4. Dichtabschnitt nach einem der vorherigen Ansprüche,
dass das Material einen Wärmeausdehnungskoeffizienten aufweist, welcher im Wesentlichen gleich dem der Keramikmembran (14) ist.

5. Dichtabschnitt nach einem der vorherigen Ansprüche,
**dadurch gekennzeichnet, dass** das Material Titan ist.

6. Dichtabschnitt nach einem der vorherigen Ansprüche,
**dadurch gekennzeichnet, dass** der Dichtabschnitt (24) eine Beschichtung (32) aus einem duktilen Material aufweist.

7. Dichtabschnitt nach einem der vorherigen Ansprüche,
**dadurch gekennzeichnet, dass** der Dichtabschnitt (24) ringförmig ausgebildet ist.

8. Anschlussstück (16) zum Anschließen einer Füllstandsmesseinheit (10) an einem Behältnis, wobei die Füllstandsmesseinheit (10)
- einen Drucksensor (12) zum Bestimmen des Drucks im Behältnis, wobei der Drucksensor (12) eine druckempfindliche Keramikmembran (14) aufweist, und
- einen Dichtabschnitt (24) zum Abdichten der Füllstandsmesseinheit (10) umfasst,
**dadurch gekennzeichnet, dass** das Anschlussstück (16) mittels eines Stoffschlusses mit dem Dichtabschnitt (24) verbindbar ist.

9. Füllstandsmesseinheit (10) zum Bestimmen des Füllstands in einem Behältnis, umfassend
- einen Drucksensor (12) zum Bestimmen des Drucks im Behältnis, wobei der Drucksensor (12) eine druckempfindliche Keramikmembran (14) aufweist, und
- ein Anschlussstück (16), mit dem die Füllstandsmesseinheit (10) am Behältnis anschließbar ist und das den Drucksensor (12) umschließt,
- **gekennzeichnet durch** einen Dichtabschnitt nach einem der Ansprüche 1 bis 7.

10. Füllstandsmesseinheit (10) nach Anspruch 9,
**dadurch gekennzeichnet, dass** die Wandung des Drucksensors (12) eine Beschichtung (32) aus einem duktilen Material aufweist.

11. Füllstandsmesseinheit (10) nach Anspruch 10,
**dadurch gekennzeichnet, dass** das Anschlussstück (16) nach einem der Ansprüche 8 oder 9 ausgebildet ist.

12. Füllstandsmesseinheit (10) nach einem der Ansprüche 10 oder 11,
**dadurch gekennzeichnet, dass** die Keramikmembran (14) Aluminiumoxid (Al₂O₃) umfasst oder hieraus besteht.

13. Verfahren zum spaltfreien Verbinden eines Dichtabschnitts (24) mit einer druckempfindlichen Keramikmembran (14) eines Drucksensors (12) und einem Anschlussstück (16) einer Füllstandsmesseinheit (10) zum Bestimmen des Füllstands in einem Behältnis, umfassend folgende Schritte:
- Erwärmen des Dichtabschnitts (24) auf eine vorgebbare Temperatur,
- Einbringen der Keramikmembran (14) in den Dichtabschnitt (24) und Aufschrumpfen des Dichtabschnitts (24) auf die Keramikmembran (14), und
- Stoffschlüssiges Verbinden des Dichtabschnitts (24) mit dem Anschlussstück (16).

## Geänderte Patentansprüche

### Geänderte Patentansprüche gemäss Regel 137(2) EPÜ.

**1.** Füllstandsmesseinheit (10) zum Bestimmen des Füllstands in einem Behältnis, wobei die Füllstandsmesseinheit (10) umfasst
- einen Drucksensor (12) zum Bestimmen des Drucks im Behältnis, wobei der Drucksensor (12) eine druckempfindliche Keramikmembran (14) aufweist,
- ein Anschlussstück (16), mit dem die Füllstandsmesseinheit (10) am Behältnis anschließbar ist und das den Drucksensor (12) umschließt, und
- einen Dichtabschnitt (24) zum Abdichten der
Füllstandsmesseinheit (10),
**dadurch gekennzeichnet, dass** der Dichtabschnitt (24) ein Material umfasst, welches so gewählt ist, dass der Dichtabschnitt (24) auf die Keramikmembran (14) aufschrumpfbar ist.

**2.** Füllstandsmesseinheit nach Anspruch 1,
**dadurch gekennzeichnet, dass** das Material des Dichtabschnitts (24) mit dem Anschlussstück (16) mittels eines Stoffschlusses verbindbar ist.

**3.** Füllstandsmesseinheit nach Anspruch 2,
**dadurch gekennzeichnet, dass** der Stoffschluss mittels eines Schmelzverfahrens und insbesondere mittels eines Schweißverfahrens bereitgestellt wird.

**4.** Füllstandsmesseinheit nach einem der vorherigen Ansprüche,
dass das Material einen Wärmeausdehnungskoeffizienten aufweist, welcher im Wesentlichen gleich dem der Keramikmembran (14) ist.

**5.** Füllstandsmesseinheit nach einem der vorherigen Ansprüche,
**dadurch gekennzeichnet, dass** das Material Titan ist.

**6.** Füllstandsmesseinheit nach einem der vorherigen Ansprüche,
**dadurch gekennzeichnet, dass** der Dichtabschnitt (24) eine Beschichtung (32) aus einem duktilen Material aufweist.

**7.** Füllstandsmesseinheit nach einem der vorherigen Ansprüche,
**dadurch gekennzeichnet, dass** der Dichtabschnitt (24) ringförmig ausgebildet ist.

**8.** Füllstandsmesseinheit (10) nach einem der vorherigen Ansprüche, **dadurch gekennzeichnet, dass** die Wandung des Drucksensors (12) eine Beschichtung (32) aus einem duktilen Material aufweist.

**9.** Füllstandsmesseinheit (10) nach einem der vorherigen Ansprüche, **dadurch gekennzeichnet, dass** die Keramikmembran (14) Aluminiumoxid (Al₂O₃) umfasst oder hieraus besteht.

**10.** Verfahren zum spaltfreien Verbinden eines Dichtabschnitts (24) mit einer druckempfindlichen Keramikmembran (14) eines Drucksensors (12) und einem Anschlussstück (16) einer Füllstandsmesseinheit (10) zum Bestimmen des Füllstands in einem Behältnis, umfassend folgende Schritte:
- Erwärmen des Dichtabschnitts (24) auf eine vorgebbare Temperatur,
- Einbringen der Keramikmembran (14) in den Dichtabschnitt (24) und Aufschrumpfen des Dichtabschnitts (24) auf die Keramikmembran (14), und
- Stoffschlüssiges Verbinden des Dichtabschnitts (24) mit dem Anschlussstück (16).
